# EUROPEAN PATENT SPECIFICATION

(11) **EP 4 594 179 B1**
(45) Date of publication and mention of the grant of the patent: **19.08.2026**
(21) Application number: 23810184.4
(22) Date of filing: 25.09.2023
(51) Int. Cl.: B64C 5/18, B64C 39/12, B64C 27/24, B64C 27/82

(54) **A HYBRID AIR VEHICLE**
HYBRIDLUFTFAHRZEUG
VÉHICULE AÉRIEN HYBRIDE

(30) Priority: 30.09.2022 TR 202215043
(43) Date of publication of application: 06.08.2025
(73) Proprietor: Tusas- Turk Havacilik Ve Uzay Sanayii Anonim Sirketi, 06980 Ankara (TR)
(72) Inventor: IBACOGLU, Hasan, 06980 Kahramankazan/Ankara (TR)
(74) Representative: Berkkam, Ayfer
(86) International application number: PCT/TR2023/051019
(87) International publication number: WO 2024/072350

(56) References cited:
- WO-A1-2016/181044
- WO-A1-2018/148851
- AT-B1- 510 341
- CN-A- 109 911 179
- RU-C1- 2 720 592
- US-A- 5 454 530
- US-A- 5 951 608

## Description

This invention relates to an air vehicle with multiple flight modes.

Multi-mode air vehicles, e.g. with a helicopter mode or an airplane mode, such as hybrid or composite air vehicles that can perform multiple missions during a flight, are suitable for flight and wide mission capabilities. The multi-mode air vehicles are developed to take off and land vertically as helicopters, and thus to be used in rough or small areas. In addition, vehicles with multiple flight modes can operate in the airplane mode to reach high speeds during the flight. According to the known-state of the art, various studies focus on stopping rotor and blades to use them as a fixed wing, in order to switch from the helicopter mode to the airplane mode.

US5454530A, which is included in the known-state of the art, discloses an air vehicle with a first flight mode and a second flight mode, in which the air vehicle flies in an helicopter mode and an airplane mode. In addition, the air vehicle has an intermediate flight regime between the first flight regime and the second flight regime, and a canard structure is provided on the air vehicle in order to provide lifting force to the air vehicle during the intermediate flight regime.

CN109911179A, which is included in the known-state of the art, discloses a propeller-winged aircraft capable of vertical takeoff and landing and flying at high speed, and a control method thereof. The tail paddle and the forward flying propeller system share a power and drive device, so that the aircraft's own weight can be greatly lightened and the required take-off power is greatly reduced.

US5951608A, which is included in the known-state of the art, discloses a rotor blade speed monitor for monitoring the rotor blade speed of the jet powered tri-mode aircraft and for outputting a rotor blade speed command. Weighted rotor blade attitude stabilization commands and weighted aero surface attitude stabilization commands are output from the aircraft attitude controller to distribute power, control, and lift between the rotor blade and the aero surfaces.

RU2720592C1, which is included in the known-state of the art, discloses adaptive missile and aviation complexes with optionally and remotely piloted helicopter aircraft having a forward horizontal tail (FGO), two-bladed rotors (DNV) mounted on a fuselage pylon, V-shaped tail and a combined engine with free power turbines driving two coaxial DNV and in an annular fairing an external fan, which creates propulsive-jet thrust during vertical and short takeoff / landing, directed horizontally backward with working / autorotating DNV or fixed by their wing-blades of asymmetrically variable sweep (LCAIS) with horizontal rotor flight in a configuration / gyroplane or triplane aircraft with a complex of internal armament, transformable after landing on the deck of an aircraft carrier (ANK) by folding the PGO and V-shaped tail with the LKAIS fixation along the axis of symmetry into a traveling-loading configuration for transporting it in a hangar ANK, refueling and loading it with ammunition.

WO2018148851A1, which is included in the known-state of the art, discloses a high-efficiency, vertical and short take-off and landing aircraft and related systems. A device is disclosed for providing lift to an aircraft, comprising a rotary lifting device (RLD) comprising a pair of RLD segments extending from a common vertical support pivotally supported by the aircraft, a drive operable to rotate the RLD relative to the aircraft, and a lock operable to secure the RLD in more than one orientation relative to the aircraft.

AT510341B1 which is included in the known-state of the art, discloses a rotary wing aircraft design capable of vertical take-off and landing similar to a helicopter, but capable of achieving higher speeds in cruise flight. The design is based on a freely rotating carrier rotor providing lift via autorotation, a jet engine generating thrust, and the use of a gasflow-driven turbine to drive the carrier rotor when required; Thus, a low-cost and reliable vertical take-off-landing system is provided without the complex and heavy gear mechanisms in helicopters.

WO2016181044A1, which is included in the known-state of the art, discloses a hoverplane, an aircraft that combines both airplane and helicopter features, and while acting like a classic airplane during horizontal flight, it includes a system that provides lift force through retractable rotors integrated into the wing and horizontal stabilizer in vertical take-off, landing and hovering modes. In this way, while providing high speed and fuel efficiency, it also offers a practical solution with low maintenance and operating costs by preserving the maneuverability and vertical take-off and landing advantages of helicopters.

The air vehicle according to the present invention as defined by claim 1 has vertical take-off and landing helicopter capabilities, as well as floating in the air like an airplane, such that the rotating rotor is stopped in the air to function as a wing in order to travel faster and stay in the air for a longer period of time, wherein the telescopic control surfaces of the canard located on the nose of the air vehicle increase the aerodynamic properties of the air vehicle during flight.

Object of the present invention is to provide additional lift to the air vehicle when the air vehicle is in airplane mode, helicopter mode and transition mode.

A hybrid air vehicle realized to achieve the object of the invention, is defined in the first claim and other claims dependent thereon.

The hybrid air vehicle realized to achieve the object of the present invention is illustrated in the attached drawings, in which:
Figure 1 is a perspective view of the air vehicle in helicopter mode and the control surface in the closed position (C).
Figure 2 is a perspective view of the air vehicle in transition mode and the control surface in the open position (A).
Figure 3 is a perspective view of the air vehicle in airplane mode.
Figure 4 is a side view of the swashplate and blades.
Figure 5 is a schematic view of the control unit and motor.

All the parts illustrated in figures are individually assigned a reference numeral and the corresponding terms of these numbers are listed below:
- 1.: Hybrid Air Vehicle
- 2.: Body
- 3.: Motor
- 4.: Rotor
- 5.: Blade
- 6.: Anti-torque System
- 7.: Propulsion System
- 8.: Canard
- 9.: Control Surface
- 10.: Vertical Stabilizer
- 11.: Control Unit
- 12.: Swashplate
- (A): Airplane mode
- (C): Closed Position
- (H): Helicopter Mode
- (O): Open Position
- (T): Transition Mode

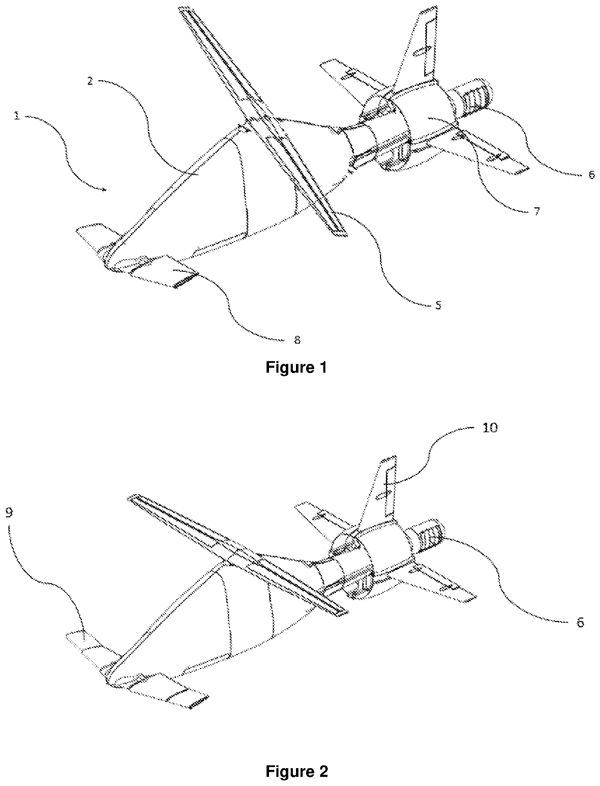

A hybrid air vehicle (1) comprises a body (2) on the air vehicle; at least one motor (3) which provides required power for the flight of the body (2); at least one rotor (4) extending outward from the body (2), connected to the motor (3), and rotating around itself; a plurality of blades (5) located on the rotor (4); a helicopter mode (H) in which the body (2) performs tasks such as vertical landing and take-off, autorotation and hovering; an anti-torque system (6) on the body (2), which creates anti-torque when the body (2) is in helicopter mode (H); an airplane mode (A) in which the rotor (4) is stopped and the blades (5) are used as fixed wings; at least one propulsion system (7) that provides thrust for the movement of the body (2) when the body (2) is in airplane mode (A); a transition mode (T) in which the rotor (4) is stopped and the propulsion system (7) is activated while the body (2) is switched from helicopter mode (H) to airplane mode (A); at least one canard (8) located in the nose area of the body (2) and providing force to the body (2) (Figure 1). Within this description, when the body (2) is defined as performing tasks, it is understood that the whole air vehicle (1) as depicted in fig. 1 performs said tasks. Likewise, the modes such as helicopter and airplane mode, are understood as being related to the whole airplane when defined as being related to the body of the airplane.

The hybrid air vehicle (1) according to the invention comprises at least one control surface (9) located in the canard (8) to extend outwards from the canard (8); a closed position (C) in which the control surface (9) is located in the canard (8); an open position (O) in which the control surface (9) is moved from the closed position (C) and extends outward from the canard (8) when the body (2) is in helicopter mode (H), transition mode (T), or airplane mode (A) (Figure 2).

During the movement of the body (2) in helicopter mode (H), the rotor (4) is stopped and the blades (5) are positioned to act as fixed wings, and the body (2) is switched into airplane mode (A). As the rotor (4) is stopped while switching from helicopter mode (H) to airplane mode (A), the lift applied to the body (2) by the blades (5) decreases. In order to solve this problem, canards (8) are placed in the front part of the body (2), so that the lift decreasing in the transition mode (T) is compensated to some extent.

Since the control surface (9), which is movably located in the canard (8), moves from the closed position (C) to the open position (O) and extends outwards from the body (2), it is triggered automatically or upon a user input in helicopter mode (H) and/or airplane mode (A) and/or transition mode (T) during a flight of the air vehicle, thereby providing additional lift to the body (2).

In an embodiment of the invention, the hybrid air vehicle (1) comprises the control surface (9) which extends telescopically from the closed position (C) through the canard (8) to the open position (O) only when the body (2) is in transition mode (T), thus providing additional lift to the body (2). When the rotor (4) is stopped, the lift acting on the body (2) provided by the blades (5) decreases. Only during transition mode (T) the control surface (9) is extended and additional lift is provided to the body (2) for a required period of time. In addition, when the transition to airplane mode (A) is completed, the control surface (9) can be closed when not required, since the lift by the blades (5) would be sufficient for flight.

In an embodiment of the invention, the hybrid air vehicle (1) comprises the control surface (9) moving along the direction that the canard (8) extends outward from the body (2) when the body (2) is in transition mode (T), such that the control surface (9) is switched from the closed position (C) to the open position (O), thereby increasing the aerodynamic surface area of the canard (8) and providing additional lift to the body (2). Thanks to the control surface (9) telescopically extending from the canard (8), the control surface (9) can be located in the canard (8) without occupying extra volume.

In an embodiment of the invention, the hybrid air vehicle (1) comprises the control surface (9) extending outward from the canard (8), rotating around the axis where it is attached to the canard (8), thereby acting as a flap on the body (2). The control surface (9) provides the flap function by being activated by the user over the trailing edge of the canard (8) in order to enable body (2) maneuvers during flight or to support fast maneuvers.

In an embodiment of the invention, the hybrid air vehicle (1) comprises at least one vertical stabilizer (10) that provides the anti-torque required by the body (2) in transition mode (T) and/or airplane mode (A) when the body (2) reaches flight values such as flight speed and altitude. As the flight speed of the hybrid air vehicle (1) increases, the vertical stabilizer (10) begins to provide sufficient anti-torque, and therefore the need for the anti-torque system (6) is eliminated.

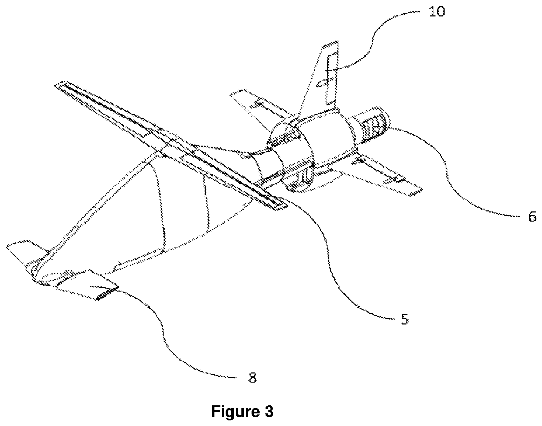

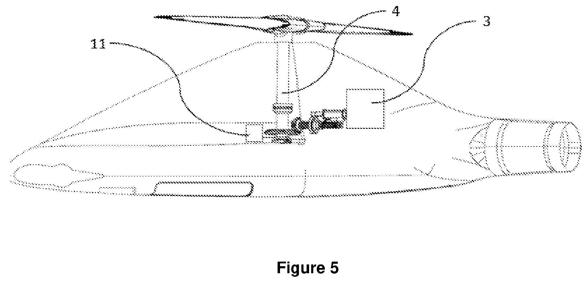

In an embodiment of the invention, the hybrid air vehicle (1) comprises at least one control unit (11) that enables the body (2) to switch from helicopter mode (H) to airplane mode (A) according to the input by the user or when it reaches flight values such as flight speed and altitude predetermined by the user. Thanks to the control unit (11), during the flight, the hybrid air vehicle (1) is switched from helicopter mode (H) to airplane mode (A) depending on the required flight type, either automatically or by the user (Figure 3, Figure 5).

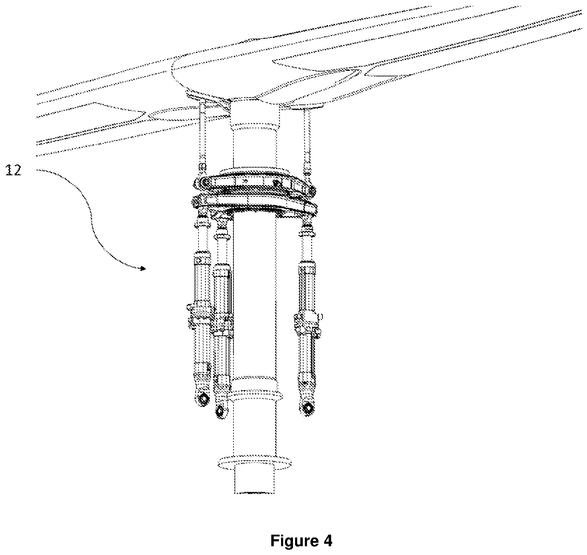

In an embodiment of the invention, the hybrid air vehicle (1) comprises the control unit (11) that moves, through telescopic movement, the control surface (9) from the closed position (C) to the open position (O) when the body (2) is in transition mode (T), and from the open position (O) to the closed position (C) when the body (2) is switched to airplane mode (A) or helicopter mode (H) (Figure 4).

In an embodiment of the invention, the hybrid air vehicle (1) comprises the anti-torque system (6) which is moved on the body (2) in a direction providing thrust to the body (2) by means of the control unit (11), when the body (2) is switched from helicopter mode (H) to airplane mode (A). Therefore, in airplane mode (A), the anti-torque system (6), which does not need to apply anti-torque to the body (2) thanks to the vertical stabilizer (10), creates additional thrust for the flight of the hybrid air vehicle (1).

In an embodiment of the invention, the hybrid air vehicle (1) comprises the canard (8) which can rotate around itself during a flight, along an axis where it is attached to the body (2), thus allowing the body (2) to be directed. In this way, the canards (8) can also be used as an auxiliary system for the blades (5) to direct the body (2) during flight.

In an embodiment of the invention, the hybrid air vehicle (1) comprises a swashplate (12) that enables the body (2) to be controlled by changing the attack angles of the blades (5) when the blades (5) are in airplane mode (A). Since the swashplate (12) controls the blades (5) so that they can move in airplane mode (A), it provides additional lift and/or maneuverability capability by changing the angle of attack of the blades (5). In addition, the need for an additional control system on the body (2) to control the blades (5) used as fixed wings is eliminated.

In an embodiment of the invention, the hybrid air vehicle (1) comprises blades (5) with elliptical cross-sections. Thanks to the blades (5) with elliptical cross-sections, each surface of the blades (5) can serve as a fixed wing and provides the aerodynamic requirements to the body (2), which are required for airplane mode (A).

## Claims

1. A hybrid air vehicle (1) comprising a body (2) on the air vehicle; at least one motor (3) which provides required power for the flight of the air vehicle; at least one rotor (4) extending outward from the body (2) on the air vehicle, (2), connected to the motor (3), and rotating around itself; a plurality of blades (5) located on the rotor (4); a helicopter mode (H) in which the air vehicle performs tasks such as vertical landing and take-off, autorotation and hovering; an anti-torque system (6) on the body (2), which creates anti-torque when the air vehicle is in helicopter mode (H); an airplane mode (A) in which the rotor (4) is stopped and the blades (5) are used as fixed wings; at least one propulsion system (7) that provides thrust for the movement of the air vehicle (1) when the air vehicle is in airplane mode (A); a transition mode (T) in which the rotor (4) is stopped and the propulsion system (7) is activated while the air vehicle is switched from helicopter mode (H) to airplane mode (A); at least one canard (8) located in the nose area of the body (2) and providing lift to the air vehicle, **characterized by** at least one control surface (9) located in the canard (8) to extend outwards from the canard (8) such that the control surface (9) moves along the direction in which the canard (8) extends outward from the body (2) while the air vehicle is in transition mode (T) and thus moves from a closed position (C) to an open position (O), thus increasing the aerodynamic surface area of the wing (8) and providing additional load-bearing force to the air vehicle; whereas said closed position (C) is the position in which the control surface (9) is located in the canard (8); and whereas said open position (O) is the position in which the control surface (9) is moved from the closed position (C) and extends outward from the canard (8) when the air vehicle is in helicopter mode (H), transition mode (T), or airplane mode (A).

2. A hybrid air vehicle (1) according to claim 1, **characterized by** the control surface (9) which extends telescopically from the closed position (C) through the canard (8) to the open position (O) only when the air vehicle is in transition mode (T), thus providing additional lift to air vehicle.

3. A hybrid air vehicle (1) according to any of the above claims, **characterized by** the control surface (9) extending outward from the canard (8), being able to rotate around the axis where it is attached to the canard (8), thereby acting as a flap on the body (2).

4. A hybrid air vehicle (1) according to any of the above claims, **characterized by** at least one vertical stabilizer (10) that provides the anti-torque required by the air vehicle in transition mode (T) and/or airplane mode (A) when the air vehicle reaches flight values such as flight speed and altitude.

5. A hybrid air vehicle (1) according to any of the above claims, **characterized by** at least one control unit (11) that enables the air vehicle to switch from helicopter mode (H) to airplane mode (A) according to the input by the user or when it reaches flight values such as flight speed and altitude predetermined by the user.

6. A hybrid air vehicle (1) according to claim 5, **characterized by** the control unit (11) that moves, through telescopic movement, the control surface (9) from the closed position (C) to the open position (O) when the air vehicle is ir transition mode (T), and from the open position (O) to the closed position (C) when the air vehicle is switched to airplane mode (A) or helicopter mode (H).

7. A hybrid air vehicle (1) according to claim 5 or claim 6, **characterized by** the anti-torque system (6) being moved on the body (2) in a direction providing thrust to the air vehicle by means of the control unit (11), when the air vehicle is switched from helicopter mode (H) to airplane mode (A).

8. A hybrid air vehicle (1) according to any of the above claims, **characterized by** the canard (8) which can rotate around itself during a flight, along an axis where it is attached to the body (2), thus allowing the air vehicle to be directed.

9. A hybrid air vehicle (1) according to any of the above claims, **characterized by** at least one swashplate (12) that enables the air vehicle (1) to be controlled by changing the angles of attack of the blades (5) when the blades (5) are in airplane mode (A).

10. A hybrid air vehicle (1) according to any of the above claims, **characterized by** blades (5) with elliptical cross-sections.

## Patentansprüche

1. Hybrid-Luftfahrzeug (1), umfassend einen Rumpf (2); mindestens einen Motor (3), der die für den Flug des Luftfahrzeugs erforderliche Leistung bereitstellt; mindestens einen Rotor (4), der sich vom Rumpf (2) nach außen erstreckt, mit dem Motor (3) verbunden ist und um seine eigene Achse rotiert; mehrere Rotorblätter (5), die an dem Rotor (4) angeordnet sind; einen Helikoptermodus (H), in dem das Luftfahrzeug Aufgaben wie senkrechte Landung und Start, Autorotation und Schweben ausführt; ein Drehmomentausgleichssystem (6), das am Rumpf (2) angeordnet ist und im Helikoptermodus (H) ein Gegendrehmoment erzeugt; einen Flugzeugmodus (A), in dem der Rotor (4) stillgesetzt ist und die Rotorblätter (5) als Tragflächen wirken; mindestens ein Antriebssystem (7), das im Flugzeugmodus (A) Schub für die Bewegung des Luftfahrzeugs (1) bereitstellt; ein Übergangsmodus (T), in dem der Rotor (4) angehalten und das Antriebssystem (7) aktiviert wird, während das Luftfahrzeug vom Hubschraubermodus (H) in den Flugzeugmodus (A) umgeschaltet wird; mindestens ein Canard (8), das im Bugbereich des Rumpfes (2) angeordnet ist und dem Luftfahrzeug Auftrieb verleiht, **dadurch gekennzeichnet, dass** mindestens eine Steuerfläche (9) im Canard (8) angeordnet und dazu ausgebildet ist, sich über den Canard (8) hinaus nach außen zu erstrecken, sodass sich die Steuerfläche (9) in Richtung der Ausdehnung des Canards (8) vom Rumpf (2) bewegt, während sich das Luftfahrzeug im Übergangsmodus (T) befindet, und sich somit von einer geschlossenen Position (C) in eine offene Position (O) bewegt, wodurch die wirksame aerodynamische Fläche des Canards (8) vergrößert und dem Luftfahrzeug zusätzlicher Auftrieb verliehen wird; wobei die geschlossene Position (C) die Position ist, in der sich die Steuerfläche (9) im Canard (8) befindet; und wobei die genannte offene Position (O) die Position ist, in der die Steuerfläche (9) aus der geschlossenen Position (C) bewegt wird und sich vom Canard (8) nach außen erstreckt, wenn sich das Luftfahrzeug im Hubschraubermodus (H), Übergangsmodus (T) oder Flugzeugmodus (A) befindet.

2. Hybrid-Luftfahrzeug (1) nach Anspruch 1, **dadurch gekennzeichnet, dass** die Steuerfläche (9) mittels einer teleskopischen Bewegung von der geschlossenen Position (C) durch den Canard (8) in die offene Position (O) verlagert wird, wenn sich das Luftfahrzeug im Übergangsmodus (T) befindet, wodurch zusätzlicher Auftrieb erzeugt wird.

3. Hybrid-Luftfahrzeug (1) nach einem der vorstehenden Ansprüche, **dadurch gekennzeichnet, dass** sich die Steuerfläche (9) über den Canard (8) hinaus erstreckt und um die Achse schwenkbar ist, über die sie mit dem Canard (8) verbunden ist, drehen kann und dadurch als Klappe am Rumpf (2) wirkt.

4. Hybrid-Luftfahrzeug (1) nach einem der vorstehenden Ansprüche, **dadurch gekennzeichnet, dass** mindestens ein Seitenleitwerk (10) ein im Übergangsmodus (T) und/oder im Flugzeugmodus (A) erforderliches Gegendrehmoment bereitstellt, wenn das Luftfahrzeug eine vorbestimmte Fluggeschwindigkeit und/oder Flughöhe erreicht.

5. Hybrid-Luftfahrzeug (1) nach einem der vorstehenden Ansprüche, **dadurch gekennzeichnet, dass** mindestens eine Steuereinheit (11) vorgesehen ist, die es dem Luftfahrzeug ermöglicht, je nach Eingabe durch den Benutzer oder beim Erreichen von Flugwerten wie Fluggeschwindigkeit und Flughöhe, die vom Benutzer vorgegeben sind, vom Hubschraubermodus (H) in den Flugzeugmodus (A) zu wechseln.

6. Hybrid-Luftfahrzeug (1) nach Anspruch 5, **dadurch gekennzeichnet, dass** die Steuereinheit (11) die Steuerfläche (9) mittels teleskopischer Bewegung von der geschlossenen Position (C) in die offene Position (O) bewegt, wenn sich das Luftfahrzeug im Übergangsmodus (T) befindet, und sie beim Umschalten des Luftfahrzeugs in den Flugzeugmodus (A) oder den Hubschraubermodus (H) von der offenen Position (O) in die geschlossene Position (C) zurückführt.

7. Hybrid-Luftfahrzeug (1) nach Anspruch 5 oder Anspruch 6, **dadurch gekennzeichnet, dass** das Anti-Drehmoment-System (6) mittels der Steuereinheit (11) relativ zum Körper (2) in eine Richtung bewegt wird, die dem Luftfahrzeug Schub verleiht, wenn das Luftfahrzeug vom Hubschraubermodus (H) in den Flugzeugmodus (A) umgeschaltet wird.

8. Hybrid-Luftfahrzeug (1) nach einem der vorstehenden Ansprüche, **dadurch gekennzeichnet, dass** der Canard (8) während des Fluges um die Achse schwenkbar ist, über die er mit dem Rumpf (2) verbunden ist, sodass das Luftfahrzeug gesteuert werden kann.

9. Hybrid-Luftfahrzeug (1) nach einem der vorstehenden Ansprüche, **dadurch gekennzeichnet, dass** mindestens eine Taumelscheibe (12), die es ermöglicht, das Luftfahrzeug (1) durch Ändern der Anstellwinkel der Rotorblätter (5) zu steuern, wenn sich die Rotorblätter (5) im Flugmodus (A) befinden.

10. Hybrid-Luftfahrzeug (1) nach einem der vorstehenden Ansprüche, **dadurch gekennzeichnet, dass** die Rotorblätter (5) einen elliptischen Querschnitt aufweisen.

## Revendications

1. Véhicule aérien hybride (1) comprenant un corps (2) ; au moins un moteur (3) fournissant la puissance nécessaire au vol du véhicule aérien ; au moins un rotor (4) s'étendant vers l'extérieur à partir du corps (2), relié audit moteur (3) et tournant autour de son propre axe ; une pluralité de pales (5) disposées sur le rotor (4) ; un mode hélicoptère (H) dans lequel le véhicule aérien réalise des opérations telles que le décollage et l'atterrissage verticaux, l'autorotation et le vol stationnaire ; un système anti-couple (6) disposé sur le corps (2), générant un anti-couple lorsque le véhicule aérien se trouve dans le mode hélicoptère (H) ; un mode avion (A) dans lequel le rotor (4) est arrêté et les pales (5) sont utilisées comme ailes fixes ; au moins un système de propulsion (7) fournissant une poussée pour le déplacement du véhicule aérien (1) lorsque celui-ci est dans le mode avion (A) ; un mode de transition (T) dans lequel le rotor (4) est arrêté et le système de propulsion (7) est activé pendant le passage du véhicule aérien du mode hélicoptère (H) au mode avion (A) ; au moins un plan canard (8) disposé dans la zone avant du corps (2) et fournissant une portance au véhicule aérien; **caractérisé en ce qu'**il comprend au moins une surface de commande (9) disposée dans le plan canard (8) et configurée pour coulisser vers l'extérieur dudit plan canard (8), de sorte que la surface de commande (9) se déplace suivant la direction dans laquelle le plan canard (8) s'étend vers l'extérieur à partir du corps (2) lorsque le véhicule aérien est dans le mode de transition (T), et passe ainsi d'une position fermée (C) à une position ouverte (O), de manière à augmenter la surface aérodynamique effective du plan canard (8) et à procurer une portance supplémentaire au véhicule aérien ; ladite position fermée (C) étant la position dans laquelle la surface de commande (9) est logée dans le plan canard (8) ; et ladite position ouverte (O) étant la position dans laquelle la surface de commande (9), déplacée depuis la position fermée (C), est déployée hors du plan canard (8) lorsque le véhicule aérien est dans le mode hélicoptère (H), le mode de transition (T) ou le mode avion (A).

2. Véhicule aérien hybride (1) selon la revendication 1, **caractérisé en ce que** la surface de commande (9) est déployée par mouvement télescopique depuis la position fermée (C) à travers le plan canard (8) jusqu'à la position ouverte (O) uniquement lorsque le véhicule aérien se trouve dans le mode de transition (T), fournissant ainsi une portance supplémentaire audit véhicule aérien.

3. Véhicule aérien hybride (1) selon l'une quelconque des revendications précédentes, **caractérisé en ce que** la surface de commande (9), s'étendant vers l'extérieur du plan canard (8), est apte à pivoter autour de l'axe par lequel elle est reliée audit plan canard (8), de manière à fonctionner comme un volet sur le corps (2).

4. Véhicule aérien hybride (1) selon l'une quelconque des revendications précédentes, **caractérisé par** au moins un stabilisateur vertical (10) fournissant l'anti-couple requis par le véhicule aérien lorsque celui-ci atteint une vitesse de vol et/ou une altitude de vol prédéterminées dans le mode de transition (T) et/ou le mode avion (A).

5. Véhicule aérien hybride (1) selon l'une quelconque des revendications précédentes, **caractérisé par** au moins une unité de commande (11) permettant au véhicule aérien de passer du mode hélicoptère (H) au mode avion (A) en fonction d'une commande de l'utilisateur ou lorsqu'il atteint une vitesse de vol et une altitude de vol prédéterminées par l'utilisateur.

6. Véhicule aérien hybride (1) selon la revendication 5, **caractérisé en ce que** l'unité de commande (11) déplace, au moyen d'un mouvement télescopique, la surface de commande (9) de la position fermée (C) vers la position ouverte (O) lorsque le véhicule aérien est dans le mode de transition (T), et de la position ouverte (O) vers la position fermée (C) lorsque le véhicule aérien est commuté vers le mode avion (A) ou vers le mode hélicoptère (H).

7. Véhicule aérien hybride (1) selon la revendication 5 ou 6, **caractérisé en ce que** le système anti-couple (6) est déplacé par rapport au corps (2), au moyen de l'unité de commande (11), dans une direction fournissant une poussée au véhicule aérien lorsque celui-ci passe du mode hélicoptère (H) au mode avion (A).

8. Véhicule aérien hybride (1) selon l'une quelconque des revendications précédentes, **caractérisé en ce que** le plan canard (8) est apte à pivoter, pendant le vol, autour de l'axe par lequel il est relié au corps (2), afin d'assurer le pilotage du véhicule aérien.

9. Véhicule aérien hybride (1) selon l'une quelconque des revendications précédentes, **caractérisé par** au moins un plateau cyclique (12) permettant de commander le véhicule aérien (1) en modifiant les angles de pas des pales (5) lorsque lesdites pales (5) sont dans le mode avion (A).

10. Véhicule aérien hybride (1) selon l'une quelconque des revendications précédentes, **caractérisé par** des pales (5) présentant des sections transversales elliptiques.
